# EUROPÄISCHE PATENTSCHRIFT

(11) **EP 3 490 088 B1**
(45) Veröffentlichungstag und Bekanntmachung des Hinweises auf die Patenterteilung: **30.12.2020**
(21) Anmeldenummer: 17306627.5
(22) Anmeldetag: 23.11.2017
(51) Int. Cl.: H02G 3/04, B29C 63/10, B29C 63/02, F16L 11/16

(54) **WICKELTEIL ZUR UMHÜLLUNG VON LEITUNGEN UND VERFAHREN ZUR HERSTELLUNG DESSELBEN**
ROLL PART FOR COATING OF WIRES AND METHOD OF PRODUCING THE SAME
PIÈCE D'ENVELOPPAGE DESTINÉE À L'ENVELOPPAGE DES CONDUITS ET SON PROCÉDÉ DE FABRICATION

(43) Veröffentlichungstag der Anmeldung: 29.05.2019
(73) Patentinhaber: Nexans, 92400 Courbevoie (FR)
(72) Erfinder: LINDNER, Gerhard, 95703 Plössberg (DE); WITTMANN, Christian, 92727 Waldthurn (DE); TEICHER, Hermann, 92702 Kohlberg (DE)
(74) Vertreter: Ipsilon

(56) Entgegenhaltungen:
- DE-A1-102014 011 917
- DE-A1-102015 118 632
- DE-U1- 9 115 540
- US-A- 2 739 089

## Beschreibung

### Gebiet

Die Erfindung betrifft eine Umhüllung für eine Leitung oder ein Leitungsbündel und ein Verfahren zur Herstellung der Umhüllung.

### Hintergrund

Kabel oder Kabelbündel werden zum Schutz vor mechanischen Belastungen, z.B. Zug- oder Schlagbelastungen, oder schädlichen Umwelteinflüssen mit einer Umhüllung geschützt. Solche Schutzumhüllungen können Schläuche mit vorgegebenen Durchmessern, bspw. Wellschläuche, oder Schläuche mit einmalig irreversibel veränderbaren Durchmessern umfassen, sogenannte Schrumpfschläuche, deren Durchmesser sich bei einer vorübergehenden Temperaturerhöhung verringert.

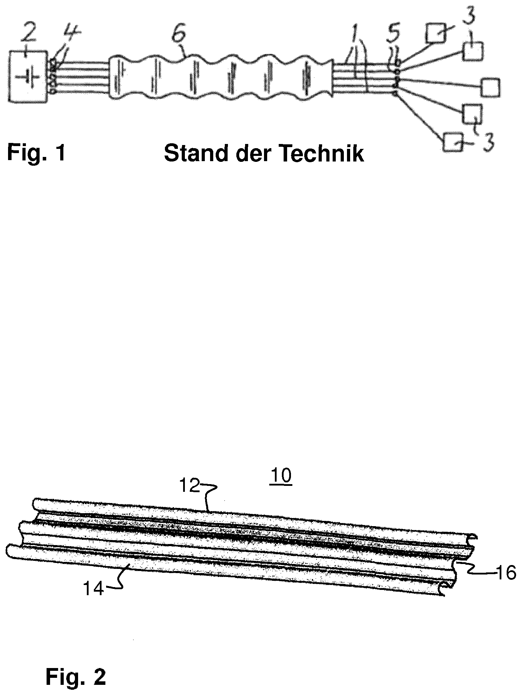

Bei Umhüllung eines Kabels oder Kabelbündels mit einem Schlauch muss dieser in einer erforderlichen Länge bereitgestellt werden, und die Kabel müssen einzeln oder im Bündel durch den Schlauch hindurchgeführt werden. Insbesondere bei längeren Schläuchen kann es erforderlich sein, das Kabel oder das Kabelbündel mittels eines Zugseils durch den Schlauch zu ziehen. Eine derartige Umhüllung ist in Figur 1 gezeigt. Eine Anzahl von Leitungen 1 ist in einem Abschnitt von einem Schlauch 6 umhüllt. Die Leitungen 1 verbinden eine Batterie 2 mit elektrischen Verbrauchern 3. Um die Leitungen 1 durch den Schlauch 6 hindurchführen zu können, ist es notwendig, die Leitungen zumindest an einer Stelle mit lösbaren elektrischen Verbindungen 4, 5 zu versehen.

Bei in Längsrichtung geschlitzten Schläuchen können Kabel oder Kabelbündel durch den Schlitz in den Schlauch gelegt werden. Derartige Schläuche sind üblicherweise mit einer versteifenden Struktur versehen, die den Querschnitt des Schlauches trotz des Schlitzes erhalten. Kabel können mit Hilfe eines speziellen Werkzeugs in den Schlauch eingelegt werden, das den Schlauch im Bereich des Schlitzes spreizt, so dass das Kabel oder das Kabelbündel eingelegt werden kann. Nach dem Einlegen des Kabels und der Entfernung des Werkzeugs bewirkt die versteifende Struktur, dass sich der Schlitz wieder schließt.

In Längsrichtung geschlitzte Schläuche haben den Nachteil, dass der Längsschlitz bei bestimmten Bewegungen oder Verformungen des Schlauches aufklaffen kann und dadurch die Kabel offen liegen. Schmutz und Feuchtigkeit können leicht eindringen und die Isolierung der Kabel angreifen oder beschädigen. Darüber hinaus können lose im Schlauch liegende Kabel durch den offenen Schlitz heraustreten. Wenn sich nun der Schlitz wieder schließt kann es vorkommen, dass das teilweise frei liegende Kabel eingeklemmt wird und dauerhaft frei liegt. Außerdem kann in dem Bereich, in dem das Kabel durch den Schlitz tritt, eine erhöhte Klemm- und Scheuerbelastung auftreten, die schließlich eine Isolierung des Kabels beschädigt oder das Kabel durchtrennen kann. Dieser Nachteil kann durch Einlegen des das Kabel oder Kabelbündel führenden, in Längsrichtung geschlitzten Schlauches in einen weiteren in Längsrichtung geschlitzten Schlauch behoben werden, wobei die Schlitze nicht parallel übereinander liegen dürfen. Dadurch erhöht sich jedoch das Gewicht der Gesamtanordnung, und die Flexibilität verringert sich erheblich. Außerdem verdoppelt sich der Materialaufwand.

Ein weiterer Nachteil von Schläuchen mit vorgegebenem Durchmesser ist, dass eine Vielzahl von Spiralschläuchen mit unterschiedlichen Durchmessern bereitgehalten werden muss, um Kabelbündel mit unterschiedlichen Anzahlen und Querschnitten von Leitungen aufnehmen zu können. Dadurch wird eine entsprechende Lagerhaltung aufwendig.

Schutzumhüllungen für Kabel oder Kabelbündel können aber auch durch Umwickeln mit band- oder streifenförmigen Schutzschichten hergestellt werden, beispielsweise durch spiralförmiges Umwickeln eines Kabelbündels mit Klebeband, oder durch Umwickeln eines Kabelbündels mit spiralförmig vorgeformten Kabelbündelhaltern. Letztere bieten jedoch aufgrund ihrer offenen Bauweise nur geringen Schutz vor Umwelteinflüssen, während erstere nur schlecht wieder lösbar sind, beispielsweise um einem Kabelbündel nachträglich weitere Kabel hinzuzufügen. Außerdem werden bei Einsatz von Klebebändern die äußeren Leitungen des Kabelbündels miteinander verklebt, was einer gewünschten Flexibilität oder Verformbarkeit des Kabelbündels entgegenwirkt.

Je nach Material und Form der Schutzumhüllung, sowie je nach dem verbleibenden Raum innerhalb der Schutzumhüllung kann eine gewisse Flexibilität des mit der Schutzhülle umgebenen Kabels oder Kabelbündels verbleiben.

Hiervon ausgehend hat die vorliegende Erfindung die Aufgabe, eine Kabelumhüllung zu schaffen, die einen oder mehrere der eingangs genannten Nachteile vermeidet oder deren Auswirkungen zumindest verringert.

### Zusammenfassung der Erfindung

Zur Lösung dieser Aufgabe schlägt die Erfindung ein Bandförmiges Wickelteil zur Umhüllung von Leitungen oder Leitungsbündeln gemäß Anspruch 1 vor.

In dieser Beschreibung schließt der Begriff Leitung energie- und datenführende elektrische Kabel, Kommunikationsmedien führende Leitungen, z.B. Lichtleiter, aber auch fluidführende Leitungen ein, bspw. Schläuche und Rohre. Ein Leitungsbündel wird durch zwei oder mehr Leitungen gebildet, wobei die Art der Leitung unerheblich ist; es können auch Leitungen unterschiedlicher Art in einem Bündel zusammengefasst sein.

Das erfindungsgemäße bandförmige Wickelteil ist unter anderem senkrecht zu einer durch eine Längsrichtung und eine Querrichtung des Wickelteils definierten Ebene profiliert. Dabei sind zumindest an den Längsseiten des Wickelteils Strukturen dergestalt geformt, dass eine an einer ersten Längsseite befindliche erste Struktur mit einer auf einer zweiten Längsseite befindlichen zweiten Struktur formschlüssig und/oder kraftschlüssig verbindbar ist. Das Wickelteil ist in Längsrichtung flexibel, so dass es zumindest in einer Richtung aufrollbar ist. Die erste und die zweite Struktur können beispielsweise die Form eines halbkreisförmigen Kreisbogensegments aufweisen.

Eine formschlüssige Verbindung der ersten und zweiten Struktur entsteht beispielsweise durch ein Ineinandergreifen der beiden Strukturen, so dass sich die beiden Strukturen auch ohne oder bei unterbrochener Krafteinbringung nicht voneinander lösen. Der Formschluss besteht dabei mindestens in einer Richtung. Bei entsprechender Gestaltung der ersten und zweiten Strukturen kann ein Formschluss bewirkt werden, der senkrecht zu der durch Längs- und Querrichtung des Wickelteils definierten Ebene stehenden Richtung wirkt. Ein Beispiel für eine erste und eine zweite Struktur zur formschlüssigen Verbindung sind zu mehr als 180° geschlossene Kreisbogensegmente, bei denen eine Struktur die andere teilweise umschließt.

Bei einem Ausführungsbeispiel des Wickelteils entspricht die Form der ersten Struktur derjenigen der zweiten Struktur. Bei Verwendung eines elastisch verformbaren Materials zumindest im Bereich der ersten und/oder der zweiten Struktur kann, bei geeigneter Auslegung, zwischen miteinander verbundenen ersten und zweiten Strukturen eine Klemmung entstehen. Zwischen den ersten und zweiten Strukturen kann mithin auch ein Kraftschluss bestehen. Bei geeigneter Auslegung der ersten und zweiten Strukturen können Form- und Kraftschluss gleichzeitig vorliegen.

Bei einem Ausführungsbeispiel weist die erste Struktur größere Dimensionen als die zweite Struktur auf, bei gleicher Form der beiden Strukturen. Zum Beispiel sind die Dimensionen so gewählt, dass die zweite Struktur in der ersten Struktur im montierten Zustand im Wesentlichen kraftfrei gelagert ist. Wenn die Strukturen eine Form aufweisen, die einen Formschluss senkrecht zu der durch Längs- und Querrichtung des Wickelteils definierten Ebene bewirken ist eine Krafteinbringung nur während der Montage erforderlich.

Bei einem Ausführungsbeispiel ist zwischen der ersten und der zweiten Struktur mindestens eine dritte Struktur angeordnet. Die eine oder mehreren dritten Strukturen können ähnliche oder gleiche Profile oder Querschnitte aufweisen wie die erste oder zweite Struktur. Die eine oder mehreren dritten Strukturen können dabei einer umwickelten Leitung oder einem umwickelten Leitungsbündel Flexibilität verleihen, so dass bspw. ein Verlegen der komplettierten Einheit aus Leitungen und Leitungsumhüllung erleichtert wird, oder wenn die komplettierte Einheit nach der Fertigstellung Bewegungen ausgleichen muss. Dazu kann die Materialstärke des Wickelteils über den Querschnitt variieren, bspw. dünner und damit leichter verformbar im Bereich der ersten, zweiten und/oder dritten Struktur, und dicker in den Zwischenbereichen. Alternativ oder zusätzlich kann eine Kombination aus Materialien mit unterschiedlichen Festigkeiten für eine oder mehrere der Strukturen und die Bereiche zwischen den Strukturen verwendet werden.

Erfindungsgemäß ist wahlweise eine Außenseite der ersten und/oder der zweiten Struktur geschlitzt oder gekerbt. Dadurch kann ein engerer Wickelradius ermöglicht werden, ohne dass eine unkontrollierte Verformung der Außenseiten des Wickelteils auftritt, insbesondere bei engen Wickelradien. Die Kerben oder Schlitze können eine Länge aufweisen, die kleiner ist als die Höhe der jeweiligen Struktur. Die Bereiche der Außenseiten zwischen den Schlitzen können im eng gewickelten Zustand überlappen. Bei Kerben in der Außenseite können die Bereiche der Außenseiten zwischen den Kerben sich im eng gewickelten Zustand teilweise berühren.

Bei einem Ausführungsbeispiel sind die Kerben an der äußeren Kante breiter als am inneren Ende, so dass eine keilförmige Kerbe entsteht. Die Dimensionen der keilförmigen Kerbe können an einen bevorzugten Wickelradius angepasst sein. Hierdurch schließen sich die Kerben bei Einhaltung des bevorzugten Wickelradius.

Erfindungsgemäß können die Bereiche der ersten und der zweiten Struktur des Wickelteils andernfals wellen- oder zickzackförmig verformt sein. Die Bereiche liegen an der Außenkante der ersten Struktur des Wickelteils und erstrecken sich streifenartig in Längsrichtung des Wickelteils. Entsprechend können die Bereiche bei der zweiten Struktur dort liegen, wo die verformten Bereiche der ersten Struktur im montierten Zustand anliegen. Es ist selbstverständlich auch möglich, dass wellen- oder zickzackförmig verformte Bereiche an zwei Seiten der ersten und der zweiten Struktur vorhanden sind. Im montierten Zustand liegen die wellen- oder zickzackförmig verformten Bereiche der miteinander verbundenen ersten und zweiten Strukturen, also der übergreifenden Struktur und der übergriffenen Struktur, zumindest teilweise übereinander und greifen zumindest bereichsweise ineinander. Bei einigen Ausführungsformen des Wickelteils wird dadurch ein Lösen der komplettierten Einheit durch Verdrehen der Umhüllung erschwert, weil zusätzlich zu dem Form- und/oder Kraftschluss zwischen der ersten und der zweiten Struktur der zumindest bereichsweise und/oder teilweise vorliegende Formschluss der ineinandergreifenden wellen- oder zickzackförmigen Bereiche der Strukturen gegen die Steifigkeit des Materials überwunden werden muss.

Ein Verfahren zur Herstellung eines Wickelteils, gemäß Anspruch 8, mit den Merkmalen einer oder mehrerer der vorstehend beschriebenen Ausführungsformen umfasst das Strangpressen des Wickelteils gefolgt vom Einbringen von Schlitzen oder Kerben an einer Außenseite der ersten und/oder der zweiten Struktur. Alternativ oder zusätzlich dazu können nach dem Strangpressen Bereiche an einer oder zwei Seiten der ersten und der zweiten Struktur wellen- oder zickzackförmig verformt werden.

Das Einbringen von Schlitzen oder Kerben kann mittels geeigneter Schneid- oder Stanzwerkzeuge unmittelbar am Ausgang des Strangpresswerkzeugs fortlaufend erfolgen. Ebenso kann das wellen- oder zickzackförmige Verformen von Bereichen der ersten und der zweiten Struktur unmittelbar am Ausgang des Strangpresswerkzeugs kontinuierlich erfolgen, beispielsweise durch sich gegenüberliegende und ineinandergreifende Zahn- oder Wellenräder, zwischen denen das Wickelteil hindurchgeführt wird. Zweckmäßigerweise weisen die Zahn- oder Wellenräder einen Abstand voneinander auf, der in etwa der Materialdicke des Wickelteils entspricht. Bei Verwendung von thermoplastischen Kunststoffen erfolgt die Verformung zweckmäßigerweise zu einem Zeitpunkt, an dem das Material noch nicht abgekühlt ist.

Das erfindungsgemäße Wickelteil ermöglicht es, eine Umhüllung einer Leitung oder eines Leitungsbündels auch nach der Fertigstellung oder Verlegung der Leitung oder des Leitungsbündels anzubringen.

Der innere Durchmesser der Umhüllung kann nach Bedarf frei gewählt werden. Es ist sogar möglich, Umhüllungen mit sich ändernden Durchmessern in einem Arbeitsgang herzustellen, bspw. an Verbindungs- oder Spleißstellen.

Die Umhüllung kann dabei auch nur bereichsweise an jeder Stelle einer Leitung oder eines Leitungsbündels angebracht werden, muss sich also nicht über die gesamte Länge der Leitung oder des Leitungsbündels erstrecken. Eine Umhüllung nur an besonders belasteten Stellen kann somit leicht nachträglich angebracht werden. Bei enganliegender Anbringung klemmt die Umhüllung an der Leitung oder dem Leitungsbündel und hemmt oder verhindert ein Verrutschen oder Scheuern. Gegebenenfalls kann im Anfangs- und Endbereich der Umhüllung eine Fixierung und/oder Abdichtung mit Klebeband, Kleber, Dichtmasse oder dergleichen erfolgen. Nicht stoffschlüssig verbundene Wicklungen der Umhüllung können zerstörungsfrei voneinander gelöst und erneut wieder verbunden werden.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine aus dem Stand der Technik bekannte Leitungsumhüllung,
- Fig. 2: ein exemplarisches Ausführungsbeispiel eines erfindungsgemäßen Wickelteils für eine Leitungsumhüllung im nicht-montierten Zustand,
- Fig. 3: ein exemplarisches Ausführungsbeispiel eines teilweise montierten erfindungsgemäßen Wickelteils für eine Kabelumhüllung,
- Fig. 4: einen Detailschnitt eines exemplarischen Ausführungsbeispiels eines erfindungsgemäßen Wickelteils im montierten Zustand,
- Fig. 5: ein exemplarisches Ausführungsbeispiel eines teilweise montierten erfindungsgemäßen Wickelteils für eine Kabelumhüllung mit einem kleinen Wickelradius,
- Fig. 6: ein exemplarisches Ausführungsbeispiel eines teilweise montierten erfindungsgemäßen Wickelteils für eine Kabelumhüllung mit einem großen Wickelradius,
- Fig. 7: ein Detail eines exemplarischen Ausführungsbeispiels des erfindungsgemäßen Wickelteils bei einer Verformung entgegen der Wickelrichtung, und
- Fig. 8: ein Detail des exemplarischen Ausführungsbeispiels des erfindungsgemäßen Wickelteils aus Figur 7 bei einer Verformung in Wickelrichtung.

Gleiche oder ähnliche Elemente sind in den Figuren mit gleichen oder ähnlichen Bezugszeichen versehen.

### Ausführungsbeispiel

Figur 1 wurde bereits bei der Darstellung des Standes der Technik beschrieben und wird an dieser Stelle nicht erneut erläutert.

Figur 2 zeigt ein exemplarisches Ausführungsbeispiel eines erfindungsgemäßen Wickelteils 10 für eine Leitungsumhüllung im nicht-montierten Zustand. Das Wickelteil 10 ist in der Figur flach ausgerollt dargestellt, es kann jedoch im nicht-montierten Zustand auch aufgerollt vorliegen. An einer ersten Seite des Wickelteils 10 ist eine erste Struktur 12 angeordnet, die im Querschnitt ein Kreissegment darstellt. An einer zweiten, der ersten Seite gegenüberliegenden Seite des Wickelteils 10 ist eine zweite Struktur 14 angeordnet. Die zweite Struktur 14 weist ebenfalls einen kreissegmentförmigen Querschnitt auf. Zwischen der ersten Struktur 12 und der zweiten Struktur 14 ist eine dritte Struktur 16 angeordnet, die ebenfalls einen kreissegmentförmigen Querschnitt aufweist.

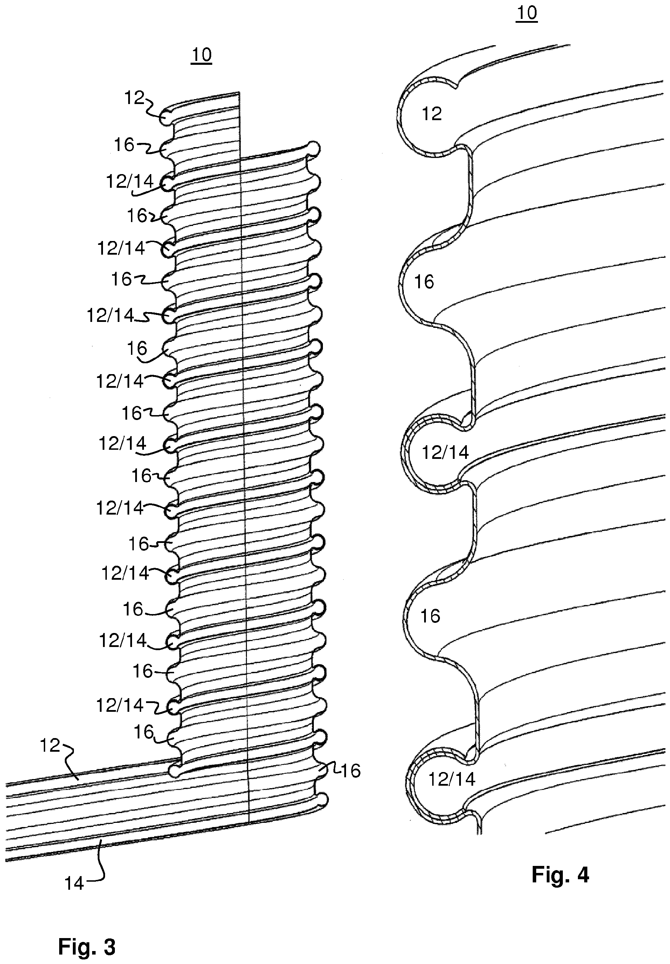

Figur 3 zeigt ein exemplarisches Ausführungsbeispiel eines teilweise montierten erfindungsgemäßen Wickelteils 10 für eine Kabelumhüllung. Das Wickelteil 10 ist in der Figur oben beginnend spiralförmig um eine in der Figur nicht dargestellte Leitung bzw. ein nicht dargestelltes Leitungsbündel gewickelt und umhüllt diese bzw. dieses. An der linken Seite der Umhüllung ist deutlich erkennbar, dass sich die Anordnung der ersten, dritten und zweiten Strukturen 12, 16 und 14 regelmäßig wiederholen. Dabei wird die erste Struktur 12 bei der Umwicklung so positioniert, dass sie über der zweiten Struktur 14 zu liegen kommt und mit dieser kraft- und/oder formschlüssig verbunden werden kann. Am unteren Ende der Umhüllung ist ein Teilstück des Wickelteils 10 in noch nicht montiertem Zustand gezeigt. Bei weitergeführter Montage würde das Teilstück zum Betrachter hin aus der Bildebene gebogen und über den bereits montierten Teil der Umhüllung gelegt.

Figur 4 zeigt einen Detailschnitt eines exemplarischen Ausführungsbeispiels eines erfindungsgemäßen Wickelteils 10 im montierten Zustand. Am oberen Ende der Figur ist eine nicht mit einer anderen Struktur verbundene erste Struktur 12 gezeigt. Die erste Struktur 12 weist einen Querschnitt auf, der ein zu mehr als 180° geschlossenes Kreissegment darstellt, bevor sie in einen quer zur Längsrichtung des Wickelteils 10 flach verlaufenden Bereich übergeht. Unterhalb der ersten Struktur ist eine dritte Struktur 16 dargestellt. Die dritte Struktur 16 weist einen ähnlichen Querschnitt wie die erste Struktur 12 auf, jedoch ist das Kreissegment nicht weiter als 180° geschlossen. Die dritte Struktur 16 verleiht dem fertig montierten Element eine gewisse Flexibilität. Unterhalb der dritten Struktur 16 ist eine zweite Struktur 14 dargestellt, die teilweise von der ersten Struktur 12 umschlossen ist. Die zweite Struktur 14 weist einen ähnlichen Querschnitt wie die erste Struktur 12 auf. Weiter unterhalb sind die ersten, zweiten und dritten Strukturen 12, 14 und 16 wiederholt dargestellt, um eine zweite Umrundung der spiralförmigen Umwicklung darzustellen. Die Verbindung der ersten und der zweiten Struktur kann nur unter Aufbringung einer Kraft gelöst werden, senkrecht zu einer Ebene steht, welche durch die Längsrichtung und die Querrichtung des Wickelteils definiert wird. In der Figur würde die Kraft jeweils oberhalb einer Verbindung von erster und zweiter Struktur 12, 14 nach rechts ausgeübt werden müssen, und entsprechend unterhalb nach links.

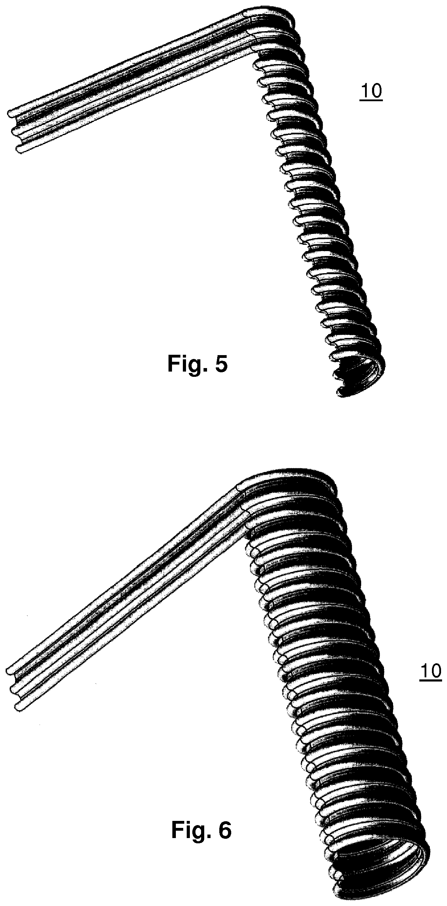

Figur 5 zeigt ein exemplarisches Ausführungsbeispiel eines teilweise montierten erfindungsgemäßen Wickelteils 10 für eine Kabelumhüllung mit einem kleinen Wickelradius. Insbesondere im Vergleich mit der maßstabgleichen Figur 6, die ein exemplarisches Ausführungsbeispiel eines teilweise montierten erfindungsgemäßen Wickelteils 10 für eine Kabelumhüllung mit einem großen Wickelradius darstellt, ist erkennbar, dass der Wickelradius desselben Wickelteils 10 frei an die jeweiligen Anforderungen angepasst werden kann.

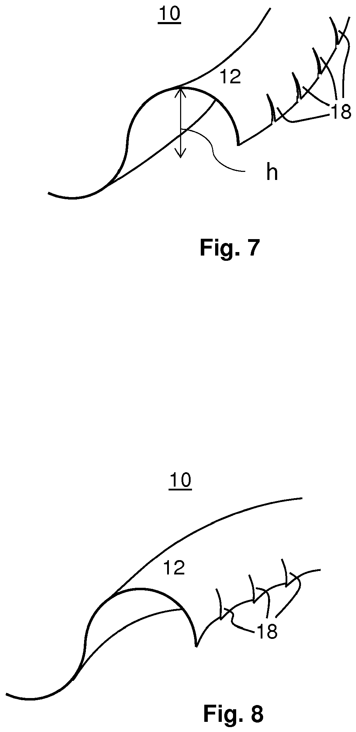

Figur 7 zeigt ein Detail eines exemplarischen Ausführungsbeispiels des erfindungsgemäßen Wickelteils 10 bei einer Verformung entgegen der Wickelrichtung. Bei diesem Ausführungsbeispiel ist die erste Struktur 12 an der Außenseite mit Schlitzen 18 versehen. Die Länge der Schlitze 18 ist kürzer als die mit einem Doppelpfeil angezeigte Höhe h der Struktur. Bei Biegung entgegen der Aufroll- oder Wickelrichtung klaffen die Schlitze 18 wie in der Figur gezeigt auf.

Figur 8 zeigt ein Detail eines exemplarischen Ausführungsbeispiels des erfindungsgemäßen Wickelteils 10 aus Figur 7 bei einer Verformung in Aufroll- oder Wickelrichtung. Deutlich ist zu erkennen, dass die zwischen den Schlitzen 18 liegenden Bereiche der ersten Struktur 12 sich schuppenartig überlappen. Dadurch wird eine undefinierte Verformung der Außenseite der ersten Struktur 12 des Wickelteils 10 vermieden. Je nach Flexibilität des verwendeten Materials bewirken die zwischen den Schlitzen 18 liegenden Bereiche der ersten Struktur 12 weiterhin eine Kraft, welche die erste Struktur 12 im montierten Zustand mit der zweiten Struktur 14 klemmend verbindet. Durch die schuppenartige Überlappung bleibt die Umhüllung weiterhin geschlossen und schützt vor dem Eindringen von Staub oder Feuchtigkeit.

### Bezugszeichenliste

- 1: Leitung
- 2: Batterie
- 3: elektrischer Verbraucher
- 4: lösbare elektrische Verbindung
- 5: lösbare elektrische Verbindung
- 6: Kabelumhüllung
- 10: Wickelteil
- 12: erste Struktur
- 14: zweite Struktur
- 16: weitere Struktur
- 18: Schlitz

## Patentansprüche

1. Bandförmiges Wickelteil (10) zur Umhüllung von Leitungen (1) oder Leitungsbündeln, wobei das Wickelteil (10) senkrecht zu einer durch eine Längsrichtung und eine Querrichtung des Wickelteils (10) definierten Ebene profiliert ist, wobei zumindest an den Längsseiten des Wickelteils Strukturen (12, 14) dergestalt geformt sind, dass eine an einer ersten Längsseite befindliche erste Struktur (12) mit einer auf einer zweiten Längsseite befindlichen zweiten Struktur (14) formschlüssig und/oder kraftschlüssig verbindbar ist, und wobei das Wickelteil (10) in Längsrichtung aufrollbar ist,
**dadurch gekennzeichnet, dass**
- eine Außenseite der ersten und/oder der zweiten Struktur (12, 14) geschlitzt (18) ist, so dass die Bereiche der jeweiligen Außenseiten zwischen den Schlitzen im eng gewickelten Zustand schuppenartig überlappen, oder
- eine Außenseite der ersten und/oder der zweiten Struktur (12, 14) gekerbt ist, so dass die Bereiche der Außenseiten zwischen den Kerben sich im eng gewickelten Zustand zumindest teilweise berühren, oder
- sich in Längsrichtung des Wickelteils erstreckende Bereiche der ersten und der zweiten Struktur des Wickelteils wellen- oder zickzackförmig verformt sind und im montierten Zustand ineinandergreifend übereinander liegen.

2. Wickelteil (10) nach Anspruch 1, wobei die Form der ersten Struktur (12) der Form der zweiten Struktur (14) entspricht.

3. Wickelteil (10) nach Anspruch 2, wobei die erste Struktur (12) größere Dimensionen aufweist als die zweite Struktur (14).

4. Wickelteil (10) nach einem der vorhergehenden Ansprüche, wobei zwischen der ersten (12) und der zweiten (14) Struktur eine oder mehrere weitere Strukturen (16) geformt sind.

5. Wickelteil (10) nach Anspruch 4, wobei die eine oder mehreren weiteren Strukturen (16) gleiche oder ähnliche Profile oder Querschnitte aufweisen wie die erste und/oder zweite Struktur (12, 14).

6. Wickelteil (10) nach einem der vorhergehenden Ansprüche, wobei die Schlitze (18) oder Kerben eine Länge aufweisen, die kleiner ist als die Höhe (h) der Struktur.

7. Wickelteil (10) nach einem der vorhergehenden Ansprüche, wobei die Kerben an der äußeren Kante der Struktur breiter sind als am inneren Ende der Kerbe.

8. Verfahren zur Herstellung eines Wickelteils (10) nach einem der Ansprüche 1 bis 7, umfassend:
- Strangpressen des Wickelteils (10); und
- Einbringen von Schlitzen (18) oder Kerben an einer Außenseite der ersten und/oder zweiten Struktur (12,14), oder
- zickzack- oder wellenförmiges Verformen von sich in Längsrichtung erstreckenden Bereichen der ersten und der zweiten Struktur (12, 14), wobei die verformten Bereiche im montierten Zustand übereinander liegen.

9. Leitung (1) oder Leitungsbündel umhüllt mit einem Wickelteil (10) nach einem der Ansprüche 1 bis 7.

## Claims

1. A band-shaped winding part (10) for enclosing lines (1) or bundles of lines, wherein the winding part (10) is profiled perpendicular to a plane defined by a longitudinal direction and a transverse direction of the winding part (10), wherein structures (12, 14) are formed at least on the longitudinal sides of the winding part in such a way, that a first structure (12) located on a first longitudinal side can be connected positively or non-positively to a second structure (14) located on a second longitudinal side, and wherein the winding part (10) can be rolled up in the longitudinal direction,
**characterized in that**
- an outer side of the first and/or of the second structure (12, 14) is slotted (18), so that the regions of the respective outer sides overlap in the closely wound state in a scale-like manner between the slots, or
- an outer side of the first and/or the second structure (12, 14) is notched, so that the regions of the outer sides touch at least partially between the notches in the closely wound state, or
- regions of the first and the second structure of the winding part extending in the longitudinal direction of the winding part are deformed in a corrugated or zigzag-shaped manner and in the assembled state are interlocked with one another one above the other.

2. The winding part (10) according to claim 1, wherein the shape of the first structure (12) corresponds to the shape of the second structure (14).

3. The winding part (10) according to claim 2, wherein the first structure (12) has larger dimensions than the second structure (14).

4. The winding part (10) according to any one of the preceding claims, wherein one or more further structures (16) are formed between the first (12) and the second (14) structure.

5. The winding part (10) according to claim 4, wherein the one or more further structures (16) have the same or similar profiles or cross sections as the first and/or second structure (12, 14).

6. The winding part (10) according to any one of the preceding claims, wherein the slots (18) or notches have a length, which is smaller than the height (h) of the structure.

7. The winding part (10) according to any one of the preceding claims, wherein the notches are wider on the outer edge of the structure than at the inner end of the notch.

8. A method for producing a winding part (10) according to any one of claims 1 to 7, comprising:
- Extrusion of the winding part (10); and
- Introduction of slots (18) or notches on an outer side of the first and/or second structure (12, 14), or
- zigzag-shaped or corrugated deformations of regions of the first and the second structure (12, 14) extending in the longitudinal direction, wherein the deformed regions lie one above another.

9. A line (1) or bundle of lines enclosed with a winding part (10) according to any one of claims 1 to 7.

## Revendications

1. Pièce d'enroulement en forme de bande (10) pour l'enveloppement de câbles (1) pour de faisceaux de câbles, dans laquelle la pièce d'enroulement (10) est profilée perpendiculairement à un plan défini par une direction longitudinale et une direction transversale de la pièce d'enroulement (10), dans laquelle, au moins sur les côtés longitudinaux de la pièce d'enroulement, des structures (12, 14) sont formées de façon à ce qu'une première structure (12), se trouvant sur un premier côté longitudinal puisse être relié par complémentarité de forme et/ou par force avec une deuxième structure (14) se trouvant sur un deuxième côté longitudinal et dans laquelle la pièce d'enroulement (10) peut être enroulé dans la direction longitudinale,
**caractérisée en ce que**
- un côté externe de la première et/ou de la deuxième structure (12, 14) est fendu (18), de façon à ce que les zones des côtés externes respectifs entre les fentes se chevauchent comme des écailles dans un état étroitement enroulé ou
- un côté externe de la première et/ou de la deuxième structure (12, 14) présente des encoches de façon à ce que les zones des côtés externes entre les encoches se touchent au moins partiellement dans l'état étroitement enroulé ou
- les zones des première et deuxième structures s'étendant dans la direction longitudinale de la pièce d'enroulement sont déformées en forme de bagues ou de zigzags et sont superposées dans l'état monté en s'emboîtant les unes dans les autres.

2. Pièce d'enroulement (10) selon la revendication 1, dans laquelle la forme de la première structure (12) correspond à la forme de la deuxième structure (14).

3. Pièce d'enroulement (10) selon la revendication 2, dans laquelle la première structure (12) présente des dimensions plus grandes que la deuxième structure (14).

4. Pièce d'enroulement (10) selon l'une des revendications précédentes, dans laquelle, entre la première (12) et la deuxième structure (14), sont formées une ou plusieurs autres structures (16).

5. Pièce d'enroulement (10) selon la revendication 4, dans laquelle une ou les plusieurs autres structures (16) présentent des profils ou des sections transversales identiques ou similaires à ceux de la première et/ou deuxième structure (12, 14).

6. Pièce d'enroulement (10) selon l'une des revendications précédentes, dans laquelle les fentes (18) ou les encoches présentent une longueur qui est inférieure à la hauteur (h) de la structure.

7. Pièce d'enroulement (10) selon l'une des revendications précédentes, dans laquelle les encoches sont plus larges sur l'arête externe qu'au niveau de l'extrémité interne de l'encoche.

8. Procédé de fabrication d'une pièce d'enroulement (10) selon l'une des revendications 1 à 7, comprenant :
- l'extrusion de la pièce d'enroulement (10) ; et
- la réalisation de fentes (18) ou d'encoches sur un côté externe de la première et/ou de la deuxième structure (12, 14) ou
- la déformation en zigzag ou en forme de vagues de zones des première et deuxième structures (12, 14) s'étendant dans la direction longitudinale, dans laquelle les zones déformées se superposent dans l'état monté.

9. Câble (1) ou faisceau de câbles enveloppé par une pièce d'enroulement (10) selon l'une des revendications 1 à 7.
